# EUROPEAN PATENT APPLICATION

(11) **EP 4 607 312 A1**
(43) Date of publication of application: **27.08.2025**
(21) Application number: 23879555.3
(22) Date of filing: 26.09.2023
(51) Int. Cl.: G05D 16/06, F16K 17/30

(54) **PRESSURE REDUCING VALVE AND VALVE DEVICE**

(30) Priority: 18.10.2022 JP 2022167212
(71) Applicant: KAWASAKI JUKOGYO KABUSHIKI KAISHA, Kobe-shi, Hyogo 650-8670 (JP)
(72) Inventor: SHIRASAWA,Masataka, Hyogo 6508670 (JP); NINOMIYA, Makoto, Hyogo 6508670 (JP); FUJIMOTO, Yoshiteru, Hyogo 6508670 (JP); SUZUKI, Yutaka, Hyogo 6508670 (JP)
(74) Representative: EIP
(86) International application number: PCT/JP2023/034961
(87) International publication number: WO 2024/084907

(57) **Abstract**

This pressure reducing valve includes: a casing in which a valve passage is formed; a valve body that is housed in the casing in an axially movable manner and adjusts an opening degree of the valve passage according to secondary pressure; and a biasing member that is housed in the casing and biases the valve body in one axial direction against the secondary pressure. The biasing member is a spring in the form of a plate extending radially outward from the valve body and is axially compressed and deformed at least when the secondary pressure is equal to atmospheric pressure.

## Description

### Technical Field

The present disclosure relates to a pressure reducing valve and a valve device that adjust the opening degree of a valve passage.

### Background Art

For example, a pressure reducing valve such as that disclosed in Patent Literature (PTL) 1 is known as a pressure reducing valve related to gas such as compressed natural gas and hydrogen gas. In the pressure reducing valve disclosed in PTL 1, secondary pressure acts on a valve body in a closing direction. Furthermore, a leaf spring is provided on the valve body. The leaf spring biases the valve body against the secondary pressure.

### Citation List

### Patent Literature

PTL 1: Japanese Laid-Open Patent Application Publication No. 2021-124130

### Summary of Invention

### Technical Problem

In the pressure reducing valve disclosed in PTL 1, an outer edge portion of the leaf spring is fixed by a casing. Therefore, reciprocation of the valve body leads to high load amplitude on and around the outer edge portion. In view of this, in a pressure reducing valve, it is desirable to improve the durability of a leaf spring, which is a biasing member, by implementing measures against the load amplitude.

An object of the present disclosure is to provide a pressure reducing valve and a valve device with which the durability of a biasing member can be improved.

### Solution to Problem

A pressure reducing valve that is the first disclosure includes: a casing in which a valve passage is formed; a valve body that is housed in the casing in an axially movable manner and adjusts an opening degree of the valve passage according to secondary pressure; and a biasing member that is housed in the casing and biases the valve body in one axial direction against the secondary pressure. The biasing member is a spring in the form of a plate extending radially outward from the valve body and is axially compressed and deformed at least when the secondary pressure is equal to atmospheric pressure.

According to the first disclosure, the biasing member is axially compressed and deformed. This means that it is possible to cause an initial load to axially act on the biasing member before the valve body is actuated. Therefore, it is possible to reduce fluctuations in the load that acts on the biasing member during reciprocation of the valve body. In other words, the load amplitude on the biasing member can be reduced. As a result, the durability of the biasing member can be improved.

A valve device that is the second disclosure includes: a casing in which a valve passage is formed; a valve body that is housed in the casing in an axially movable manner and changes a position thereof according to a force acting thereon to change an opening degree of the valve passage; and a biasing member that is housed in the casing and biases, against a force acting thereon, the valve body in one axial direction in which the valve passage is opened. The biasing member is a spring in the form of a plate extending laterally from the valve body and is axially compressed and deformed by the casing.

According to the second disclosure, the biasing member is axially compressed and deformed by the casing. This means that it is possible to cause an initial load to axially act on the biasing member before the valve body is actuated. Therefore, it is possible to reduce fluctuations in the load that acts on the biasing member during reciprocation of the valve body. In other words, the load amplitude on the biasing member can be reduced. As a result, the durability of the biasing member can be improved.

### Advantageous Effects of Invention

According to the present disclosure, it is possible to improve the durability of the biasing member.

### Brief Description of Drawings

Fig. 1 is a cross-sectional view illustrating a pressure reducing valve according to an embodiment of the present disclosure.
Fig. 2 is a cross-sectional view illustrating a leaf spring included in the pressure reducing valve illustrated in Fig. 1.
Fig. 3 is an enlarged cross-sectional view of a region X portion of the pressure reducing valve illustrated in Fig. 1.
Fig. 4 is an enlarged cross-sectional view of a region Y portion of the pressure reducing valve illustrated in Fig. 1.
Fig. 5 is a cross-sectional view of the pressure reducing valve illustrated in Fig. 1 with a valve body having moved toward a valve seat part.
Fig. 6 is a cross-sectional view illustrating a pressure reducing valve according to Embodiment 2.
Fig. 7 is a cross-sectional view illustrating a pressure reducing valve according to Embodiment 3.
Fig. 8 is a cross-sectional view illustrating a pressure reducing valve according to Embodiment 4.
Fig. 9 is a cross-sectional view illustrating a pressure reducing valve according to another embodiment.

### Description of Embodiments

Hereinafter, pressure reducing valves 1, 1A to 1C according to Embodiments 1 to 4 of the present disclosure will be described with reference to the drawings mentioned above. Note that the concept of directions mentioned in the following description is used for the sake of explanation; the orientations, etc., of elements according to the invention are not limited to these directions. Each of the pressure reducing valves 1, 1A to 1C described below is merely one embodiment of the present disclosure. Thus, the present disclosure is not limited to the following embodiments and may be subject to addition, deletion, and alteration within the scope of the essence of the invention.

### <Pressure Reducing Valve>

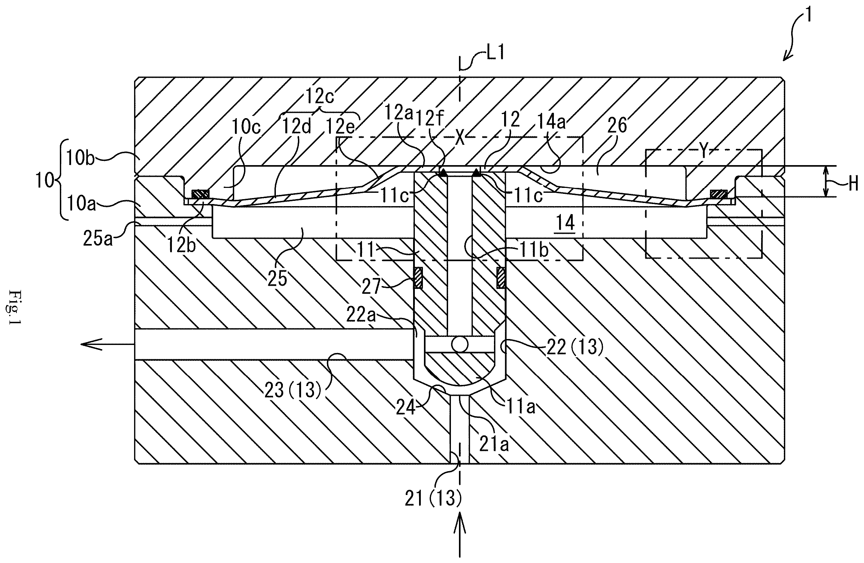

The pressure reducing valve 1, which is one example of the valve device according to Embodiment 1, includes a casing 10, a valve body 11, and a leaf spring 12, as illustrated in Fig. 1. The pressure reducing valve 1 reduces the pressure of gas such as compressed natural gas and hydrogen gas to working pressure, atmospheric pressure, or the like.

### <Casing>

In the casing 10, a valve passage 13 and a valve space 14 are formed. More specifically, the casing 10 includes a housing block part 10a and a cover part 10b. In the housing block part 10a, the valve passage 13 is formed. Furthermore, in the casing 10, the cover part 10b is placed over the housing block part 10a, so that the valve space 14 is formed within the casing 10.

The valve passage 13 includes a primary passage 21, a valve chamber 22, and a secondary passage 23. In the valve passage 13, gas flowing from the primary passage 21 is output to the secondary passage 23 through the valve chamber 22. More specifically, the primary passage 21 and the valve chamber 22 are both formed along a predetermined axial line L1. The valve chamber 22 is located on one side in the axial direction with respect to the primary passage 21, and the primary passage 21 is connected to the valve chamber 22 via a valve port 21a. Note that the axial direction is a direction along the axial line L1. A valve seat part 24 is formed around the valve port 21a in the casing 10. The secondary passage 23 is open to the inner peripheral surface of the valve chamber 22 and is connected to the valve chamber 22. The secondary passage 23 extends from the inner peripheral surface of the valve chamber 22 in a direction perpendicular to the axial line L1.

The valve space 14 is formed within the casing 10. More specifically, the valve space 14 is formed on one side in the axial direction with respect to the valve chamber 22 in the casing 10. The valve space 14 is connected to the valve chamber 22. The valve space 14 is divided by the leaf spring 12 as an atmosphere chamber 25 and a secondary chamber 26, which will be described in detail below.

### <Valve Body>

The valve body 11 is housed in the casing 10. More specifically, the valve body 11 is inserted into the valve chamber 22 of the casing 10 so as to be axially movable. Note that the valve body 11, which is a columnar member, for example, is formed of a synthetic resin. Furthermore, a sealing member 27 is disposed on the outer peripheral surface of the valve body 11. The valve body 11 is inserted into the valve chamber 22 in the state of being sealed by the sealing member 27. As a result, the valve chamber 22 and the valve space 14 are sealed together. One axial end portion of the valve body 11 projects into the valve space 14. Furthermore, the leaf spring 12, which will be described in detail later, is attached to the one axial end portion of the valve body 11. Moreover, the valve body 11 is positioned so that a leading end portion 11a, which is the other axial end portion thereof, faces the valve seat part 24.

The valve body 11 adjusts the opening degree of the valve passage 13 according to a force acting on the valve body 11 (the secondary pressure to be described later in the present embodiment). More specifically, the valve body 11 is inserted into the valve chamber 22 so as to be axially movable. An annular passage 22a is formed around the leading end portion 11a of the valve body 11. Therefore, the primary passage 21 is connected to the secondary passage 23 through the annular passage 22a. Furthermore, the valve body 11 moves toward and away from the valve seat part 24. Thus, the valve body 11 adjusts the opening degree of the valve port 21a of the primary passage 21. In other words, when the valve body 11 moves, the opening degree of the valve passage 13 is adjusted.

Furthermore, a communication passage 11b is formed in the valve body 11. The communication passage 11b is a passage penetrating the valve body 11. More specifically, the communication passage 11b is open on the other side in the axial direction on the outer peripheral surface of the valve body 11, and is open at the one axial end portion. The communication passage 11b connects the annular passage 22a and the valve space 14 (more specifically, the secondary chamber 26, which will be described in detail later).

### <Leaf Spring>

The leaf spring 12, which is a biasing member, is housed in the casing 10. More specifically, the leaf spring 12 is housed in the valve space 14 of the casing 10. The leaf spring 12 is attached to the valve body 11. The leaf spring 12 extends outward from the valve body 11 in the radial direction of the valve body 11. Furthermore, the leaf spring 12 biases the valve body 11 in the one axial direction (which is a direction in which the valve body 11 moves away from the valve seat part 24, that is, an opening direction, in the present embodiment).

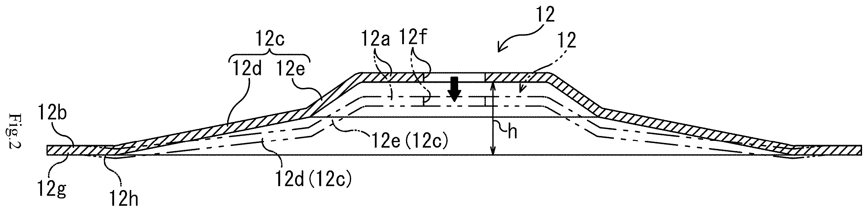

The configuration of the leaf spring 12 will be described in greater detail below. The leaf spring 12 is a metal member in the form of a plate (which is a member made of an alloy or a stainless steel (SUS) such as SUS304CSP in the present embodiment), for example. The leaf spring 12 has the following shape. The leaf spring 12 is formed in the shape of a circular disc when viewed in plan. The leaf spring 12 is formed having a protruding shape when viewed in cross-section with a radial center portion (hereinafter referred to as "the center portion") 12a rising in the one axial direction, as illustrated in Fig. 2. The center portion 12a of the leaf spring 12 is formed flat with a diameter greater than the outer diameter of the valve body 11. Furthermore, an outer edge portion 12b of the leaf spring 12 extends radially outward from the valve space 14 when viewed in plan. The outer edge portion 12b of the leaf spring 12 is formed flat. In the present embodiment, the outer edge portion 12b of the leaf spring 12 extends substantially straight in the radial direction.

Furthermore, the leaf spring 12 includes a tapered part 12c connecting the outer edge portion 12b and the center portion 12a. The tapered part 12c is formed as follows. Specifically, the tapered part 12c is formed having a tapered shape. The tapered part 12c is formed having a tapered shape with more than one angle, for example. In the tapered part 12c, an outer edge side portion 12d and a center side portion 12e have different taper angles. In the present embodiment, the taper angle of the center side portion 12e is more acute than the taper angle of the outer edge side portion 12d. Therefore, when the center portion 12a moves in the other axial direction, the leaf spring 12 bends as follows. Specifically, the tapered part 12c elastically deforms while changing the relative angle between the outer edge side portion 12d and the center side portion 12e (refer to the dash-dot-dot line in Fig. 2). Thus, the shape of the outer edge side portion 12d remains unchanged when the center portion 12a moves in parallel with the other axial direction. Note that the tapered part 12c does not necessarily need to be formed having a tapered shape with more than one angle. In other words, the tapered part 12c may be formed at a single taper angle.

The leaf spring 12 is attached to the one axial end portion of the valve body 11 as mentioned above. In the present embodiment, a surface of the center portion 12a that is located on the other side in the axial direction is bonded to the one axial end portion of the valve body 11. Furthermore, in the leaf spring 12, an insertion hole 12f is formed in the center portion 12a. The insertion hole 12f is formed in line with an opening of the communication passage 11b that is located at the one axial end portion of the valve body 11 (hereinafter referred to as "the secondary opening"). In the present embodiment, the insertion hole 12f is formed having a diameter greater than the diameter of the secondary opening.

Note that examples of the attachment method include the following methods. Specifically, surface treatment is applied to the surface of the center portion 12a that is located on the other side in the axial direction. Examples of the surface treatment include chemical treatment and physical treatment involving laser irradiation. After the surface treatment, the valve body 11 made of a synthetic resin such as polyether ether ketone (PEEK), polyphenylene sulfide (PPS), polyimide (PI), and polyamide-imide (PAI) is formed by resin molding on the surface of the center portion 12a that is located on the other side in the axial direction, and these are bonded together. Other conceivable examples of the attachment method include attachment using a snap-fit, an adhesive, an adhesive tape, and a bush and attachment by way of chemical bonding, outsert molding, and the like. In these examples of the attachment method, it is preferred that the seal between the valve body 11 and the leaf spring 12 be ensured using a sealing member or the like.

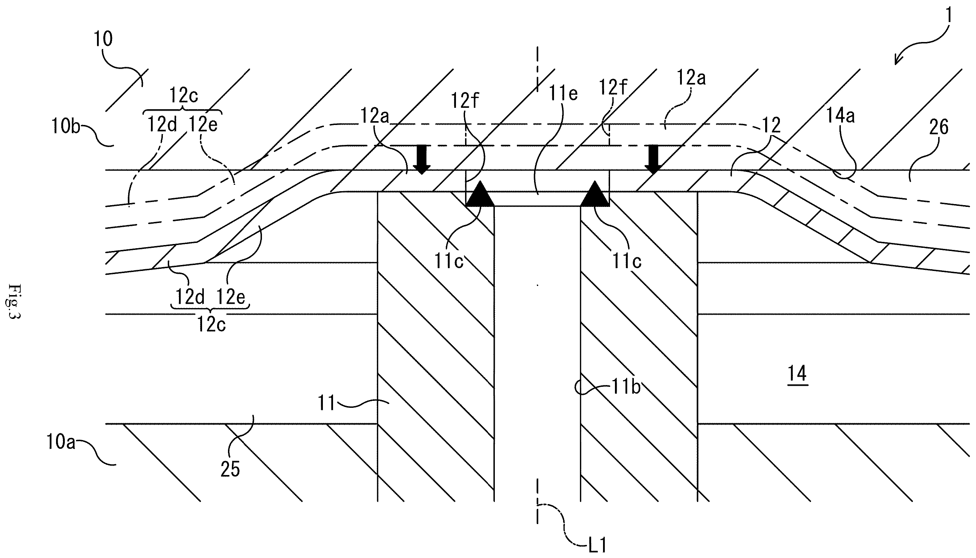

When the valve body 11 is formed by resin molding, a gate residue 11c is formed of a resin on the one axial end portion of the valve body 11, as illustrated in Fig. 3. More specifically, the insertion hole 12f of the leaf spring 12 is formed having a diameter greater than the diameter of the communication passage 11b as mentioned above. The gate residue 11c is formed on one axial surface of the valve body 11 during resin molding so that the gate residue 11c is located within the insertion hole 12f around the secondary opening of the valve body 11. A leading end of the gate residue 11c formed is lower than a surface of the leaf spring 12 that is located on one side in the axial direction. Note that in the present embodiment, a counterbore 11e depressed in the other axial direction is formed around the secondary opening at the one axial end portion (more specifically, one axial end) of the valve body 11. The gate residue 11c is formed on the counterbore 11e. Thus, even when the gate residue 11c is formed elongated in the axial direction, the leading end of the gate residue 11c can be kept from extending beyond the surface of the leaf spring 12 that is located on one side in the axial direction. As a result, the gate residue 11c is less likely to come into contact with a ceiling surface 14a of the casing 10.

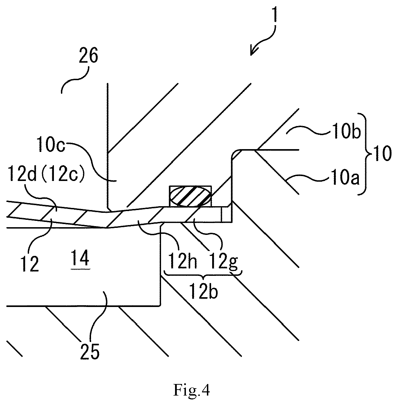

Furthermore, the leaf spring 12 is fixed to the casing 10, as illustrated in Fig. 4. More specifically, the outer edge portion 12b of the leaf spring 12 is fixed to the casing 10 along the entire circumference. More specifically, an outer fixed portion 12g of the leaf spring 12 that is located radially outward (in other words, the outer edge of the outer edge portion 12b) is fixed. In the present embodiment, the leaf spring 12 is fixed to the casing 10 with the outer fixed portion 12g held between the cover part 10b and the housing block part 10a along the entire circumference. More specifically, the outer edge portion 12b of the leaf spring 12 is placed on an end surface of the housing block part 10a. The cover part 10b is placed over the housing block part 10a so that the end surfaces thereof abut each other. Furthermore, the cover part 10b is screwed to the housing block part 10a in the present embodiment. As a result, the outer edge of the leaf spring 12 is held between the end surfaces of the cover part 10b and the housing block part 10a. Note that the cover part 10b and the housing block part 10a may be joined together by two or more fasteners (for example, bolts). When these are joined together, the outer edge of the leaf spring 12 is held between the cover part 10b and the housing block part 10a. The leaf spring 12 disposed as just described biases the valve body 11 in the opening direction against the secondary pressure.

Furthermore, the leaf spring 12 forms the secondary chamber 26 and the atmosphere chamber 25 in the casing 10, as illustrated in Fig. 1. More specifically, the leaf spring 12 forms the atmosphere chamber 25 and the secondary chamber 26 in the casing 10 by partitioning the valve space 14 of the casing 10.

The secondary chamber 26 is a chamber to which the secondary pressure is brought and allows the secondary pressure brought thereto to act on the valve body 11. The secondary chamber 26 is located on one side in the axial direction with respect to the leaf spring 12. In the present embodiment, the secondary chamber 26 is formed mainly in the cover part 10b. The secondary chamber 26 is isolated from the atmosphere chamber 25 by the leaf spring 12 as mentioned above. On the other hand, the secondary chamber 26 is connected to the valve passage 13 (more specifically, the annular passage 22a) through the communication passage 11b of the valve body 11. Therefore, the secondary pressure is brought to the secondary chamber 26 through the communication passage 11b. The leaf spring 12 receives the secondary pressure brought to the secondary chamber 26. The secondary pressure acts on the valve body 11 via the leaf spring 12 in the other axial direction. By receiving the secondary pressure, the leaf spring 12 bends. As a result, the leaf spring 12 exerts the elastic restoring force to bias the valve body 11 in the one axial direction.

The atmosphere chamber 25 is a chamber maintained at atmospheric pressure so that the axial compression and deformation of the leaf spring 12 is permitted. The atmosphere chamber 25 is located on the opposite side of the leaf spring 12 from the secondary chamber 26, that is, on the other side in the axial direction. In other words, the atmosphere chamber 25 is located on the valve chamber 22 side of the leaf spring 12. The atmosphere chamber 25 is open to the atmosphere. More specifically, an atmosphere open passage 25a is formed in the casing 10. The atmosphere chamber 25 is open to the atmosphere through the atmosphere open passage 25a. This means that the atmosphere chamber 25 is maintained at atmospheric pressure. Therefore, the atmosphere chamber 25 permits the axial compression and deformation of the leaf spring 12.

Furthermore, the leaf spring 12 is housed in the casing 10. The leaf spring 12 is axially compressed and deformed at least when the secondary pressure is equal to atmospheric pressure (in other words, in an unpressurized state). More specifically, the casing 10 is formed as follows. Specifically, in the casing 10, the secondary chamber 26 is formed having a diameter less than the diameter of the atmosphere chamber 25. In other words, the inner peripheral surface of the casing 10 includes a step 10c on the secondary chamber 26 side, as illustrated in Fig. 4. More specifically, the inner peripheral surface of the cover part 10b projects radially inward relative to the inner peripheral surface of the housing block part 10a. As a result, in the casing 10, the step 10c is formed between the cover part 10b and the housing block part 10a along the entire circumference. An end surface of the step 10c that is located on the other side in the axial direction is formed having a tapered shape. More specifically, the end surface of the step 10c that is located on the other side in the axial direction is inclined so as to extend further in the other axial direction as a position on the end surface becomes more radially inward. As a result, in the outer edge portion 12b of the leaf spring 12, an adjacent portion 12h which is adjacent to the outer fixed portion 12g is pressed by the step 10c along the entire circumference. Thus, the leaf spring 12 is pressed in the other axial direction and axially compressed and deformed.

Furthermore, as illustrated in Fig. 3, when the center portion 12a is pressed by the casing 10, the leaf spring 12 is axially compressed and deformed. More specifically, in the leaf spring 12, a surface of the center portion 12a that is located on one side in the axial direction is pressed by the casing 10. Furthermore, in the present embodiment, the casing 10 is formed as follows. Specifically, in the casing 10, the center portion 12a of the leaf spring12 is in abutment with the ceiling surface 14a of the valve space 14. More specifically, in the casing 10, a ceiling height H from the outer fixed portion 12g to the ceiling surface 14a (corresponding to the height of the secondary chamber 26; refer to Fig. 1) is less than a free height h of the leaf spring 12 (refer to Fig. 2). Therefore, the center portion 12a of the leaf spring12 abuts the ceiling surface 14a. As a result, the leaf spring 12 is axially compressed and deformed (refer to the dash-dot-dot line and the solid line in Fig. 3). Note that as one example, the ceiling height H is set to 30% to 70% of the free height h.

### <Operation of Pressure Reducing Valve>

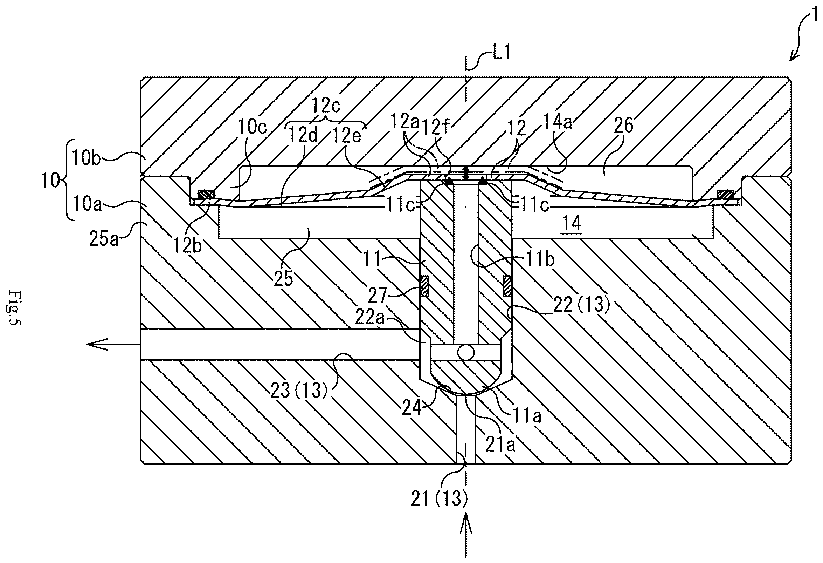

In the pressure reducing valve 1 configured as described above, the leaf spring 12 biases the valve body 11 in the one axial direction, as illustrated in Fig. 1. Therefore, the valve passage 13 is open. Thus, the gas is output from the primary passage 21 to the secondary passage 23 through the annular passage 22a of the valve chamber 22. Furthermore, the gas is also brought from the annular passage 22a to the secondary chamber 26 through the communication passage 11b. This means that the secondary pressure is brought to the secondary chamber 26. Therefore, when the secondary pressure exceeds a predetermined pressure, the leaf spring 12 forces the valve body 11 to move to the position corresponding to the secondary pressure, as illustrated in Fig. 5. Thus, the opening degree of the valve passage 13 (more specifically, the opening degree of the valve port 21a) is adjusted according to the secondary pressure. The pressure reducing valve 1 maintains the secondary pressure at the predetermined pressure.

Furthermore, in the pressure reducing valve 1, the valve body 11 reciprocates in the one and other axial directions to adjust the opening degree of the valve passage 13. When the valve body 11 reciprocates in the one and other axial directions, the leaf spring 12 is repeatedly compressed and deformed and elastically restored. As a result, the leaf spring 12 repeatedly oscillates in the axial direction, and thus an amplitude load acts on the leaf spring 12 (more specifically, the adjacent portion 12h). In this regard, in the pressure reducing valve 1, the leaf spring 12 has already been compressed and deformed in the unpressurized state. In other words, the initial load is acting on the leaf spring 12. This allows for a reduction in the difference between the initial load and the load acting on the leaf spring 12 in the pressurized state in which the secondary pressure has increased. Thus, the load amplitude based on the load acting on the leaf spring 12 during actuation can be reduced.

In the pressure reducing valve 1 according to Embodiment 1, the leaf spring 12 is axially compressed and deformed. This means that it is possible to cause the initial load to axially act on the leaf spring 12 before the valve body 11 is actuated. Therefore, it is possible to reduce fluctuations in the load that acts on the leaf spring 12 during reciprocation of the valve body 11. In other words, the load amplitude on the leaf spring 12 can be reduced. As a result, the durability of the leaf spring 12 can be improved.

Furthermore, in the pressure reducing valve 1 according to Embodiment 1, the leaf spring 12 is axially compressed and deformed by the casing 10. Therefore, the number of components is kept from increasing.

Furthermore, in the pressure reducing valve 1 according to Embodiment 1, when the adjacent portion 12h is pressed by the casing 10, the leaf spring 12 is axially compressed and deformed. Therefore, it is possible to cause a load to act on the adjacent portion 12h in advance on which the load amplitude increases during actuation of the valve body 11. This makes it possible to reduce fluctuations in the load during reciprocation of the valve body 11. In other words, the load amplitude can be reduced.

Furthermore, in the pressure reducing valve 1 according to Embodiment 1, when the center portion 12a is pressed by the casing 10, the leaf spring 12 is axially compressed and deformed. Therefore, the load amplitude can be kept from increasing during reciprocation of the valve body 11.

Furthermore, in the pressure reducing valve 1 according to Embodiment 1, the valve body 11 is attached to the center portion 12a of the leaf spring 12. Therefore, the direction in which the leaf spring 12 is pressed and the direction of movement of the valve body 11 can be easily made coincident. This makes it possible to reduce the occurrence of partial contact or the like during reciprocation of the valve body 11, allowing the valve body 11 to move smoothly.

Furthermore, in the pressure reducing valve 1 according to Embodiment 1, the valve body 11 includes the gate residue 11c at the one axial end portion. Therefore, the gate residue 11c is prevented from contacting the valve seat part 24 during actuation of the valve body 11. This prevents degradation of the seat properties of the valve seat part 24 that occurs due to the gate residue.

### [Embodiment 2]

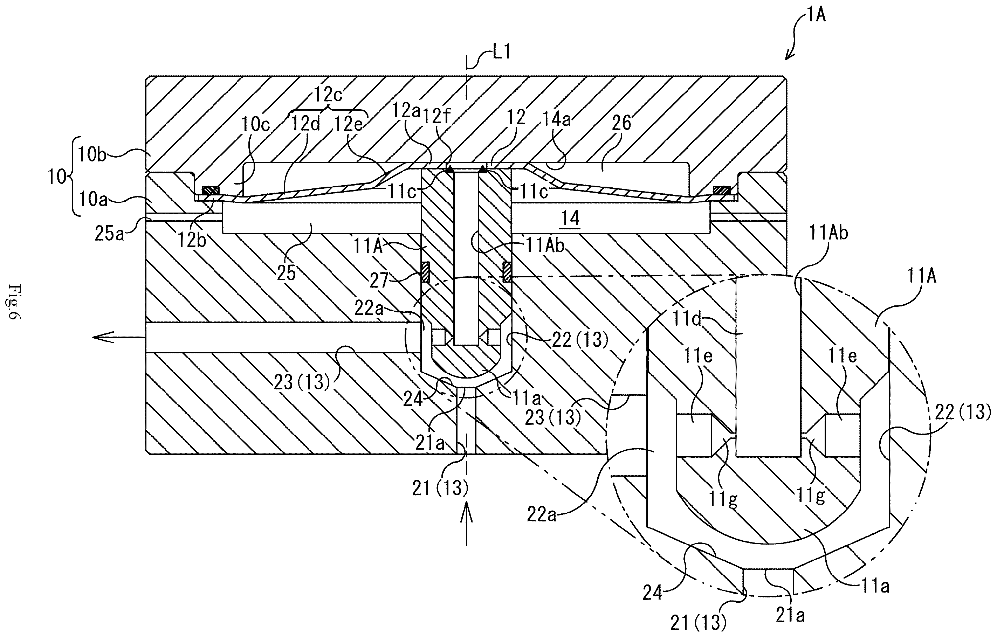

A pressure reducing valve 1A according to Embodiment 2 illustrated in Fig. 6 includes elements that are similar to those of the pressure reducing valve 1 according to Embodiment 1. The elements of the pressure reducing valve 1A according to Embodiment 2 will be described focusing on differences from the pressure reducing valve 1 according to Embodiment 1; elements that are the same as those of the pressure reducing valve 1 according to Embodiment 1 share the same reference signs, and as such, description of the elements will be omitted. The same also applies to pressure reducing valves 1B, 1C according to Embodiments 3, 4, which will be described later.

In the pressure reducing valve 1A according to Embodiment 2, a communication passage 11Ab of a valve body 11A includes a throttle 11g. More specifically, the communication passage 11Ab includes a first passage part 11d and a plurality of second passage parts 11e (two second passage parts 11e in the present embodiment). The first passage part 11d extends axially in the valve body 11. The first passage part 11d is open at the one axial end portion of the valve body 11 and is connected to the secondary chamber 26. Each of the second passage parts 11e extends radially on the other side in the axial direction in the valve body 11. Each of the second passage parts 11e is open on the other side in the axial direction on the outer peripheral surface of the valve body 11 and is connected to the annular passage 22a. Furthermore, each of the second passage parts 11e is connected to the first passage part 11d through the throttle 11g on the radially inner side. In the present embodiment, the throttle 11g is formed to be tapered radially inward. Therefore, the communication passage 11Ab has a narrow passage width at the throttle 11g and inhibits the transfer of pressure fluctuations when the secondary pressure is brought to the secondary chamber 26.

In the pressure reducing valve 1A according to Embodiment 2, the communication passage 11Ab includes the throttle 11g. Therefore, it is possible to inhibit the transfer of secondary oscillation and a surge pressure in the secondary pressure to the secondary chamber 26. As a result, the leaf spring 12 and the valve body 11 can be protected from the effects of the secondary oscillation and the surge pressure. Thus, the occurrence of chattering at the valve body 11 is reduced.

The pressure reducing valve 1A according to Embodiment 2 produces substantially the same advantageous effects as those produced by the pressure reducing valve 1 according to Embodiment 1.

### [Embodiment 3]

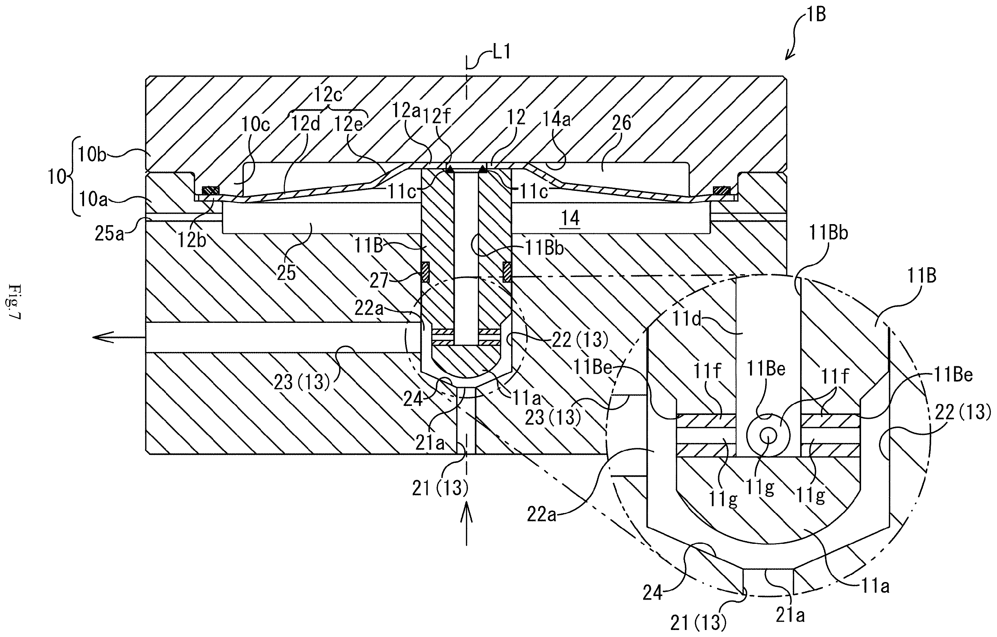

In a pressure reducing valve 1B according to Embodiment 3 illustrated in Fig. 7, a communication passage 11Bb of a valve body 11B includes a throttle 11g. More specifically, the communication passage 11Bb includes a first passage part 11d and a plurality of second passage parts 11Be (four second passage parts 11Be in the present embodiment). Each of the second passage parts 11Be extends radially on the other side in the axial direction in the valve body 11. Each of the second passage parts 11Be is open on the other side in the axial direction on the outer peripheral surface of the valve body 11 and is connected to the annular passage 22a. Furthermore, each of the second passage parts 11e is connected to the first passage part 11d on the radially inner side. Moreover, a throttle member 11f is fitted and inserted in the second passage part 11e. The throttle member 11f is formed in the shape of a cylinder, and the inner hole thereof forms the throttle 11g. Therefore, the throttle 11g is formed in the second passage part 11e. The communication passage 11Bb has a narrow passage width at the throttle 11g. Therefore, the communication passage 11Bb also inhibits the transfer of pressure fluctuations when the secondary pressure is brought to the secondary chamber 26.

The pressure reducing valve 1B according to Embodiment 3 produces substantially the same advantageous effects as those produced by the pressure reducing valve 1A according to Embodiment 2.

### [Embodiment 4]

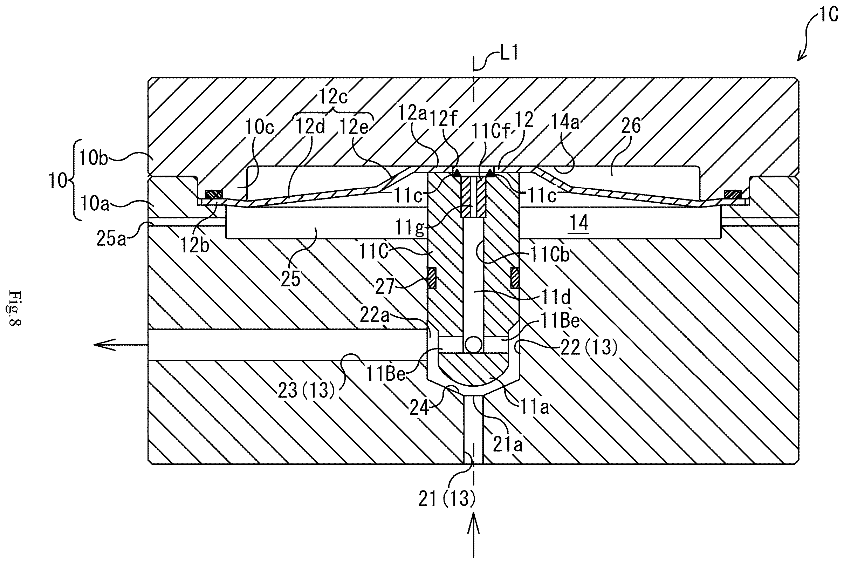

In a pressure reducing valve 1C according to Embodiment 4 illustrated in Fig. 8, a communication passage 11Cb of a valve body 11C includes a throttle 11g. More specifically, the communication passage 11Cb includes a first passage part 11d and a plurality of second passage parts 11Be (four second passage parts 11Be in the present embodiment). A throttle member 11Cf is fitted and inserted in the first passage part 11d. The throttle member 11Cf is formed in the shape of a cylinder, and the inner hole thereof forms the throttle 11g. Therefore, the throttle 11g is formed in the first passage part 11d. The communication passage 11Cb also has a narrow passage width at the throttle 11g. Therefore, the communication passage 11Cb also inhibits the transfer of pressure fluctuations when the secondary pressure is brought to the secondary chamber 26.

The pressure reducing valve 1C according to Embodiment 4 produces substantially the same advantageous effects as those produced by the pressure reducing valve 1B according to Embodiment 3.

### [Other Embodiments]

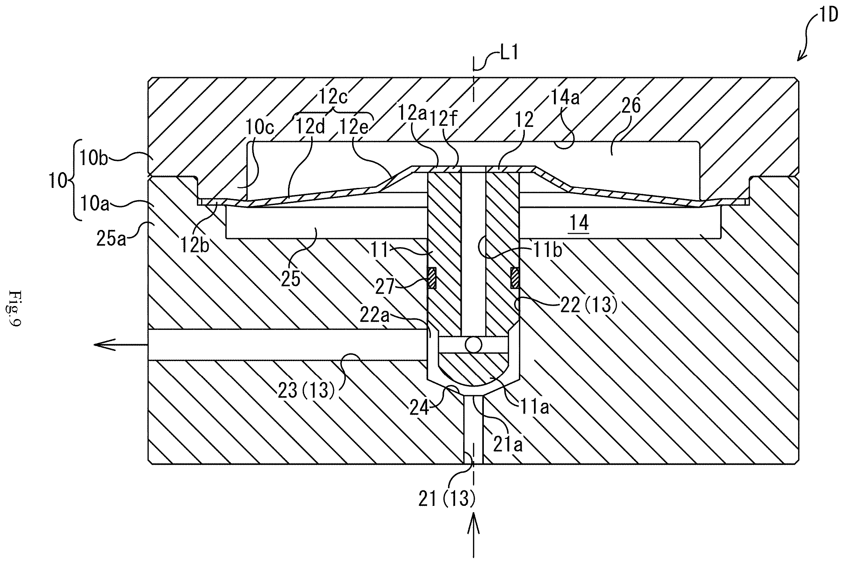

In the present embodiment, the pressure reducing valve 1 has thus far been described as one example of the valve device; however, the valve device is not limited to the pressure reducing valve 1. The valve device may be an on-off valve or a relief valve, for example; it is sufficient that the valve device axially bias the valve body 11 against gas pressures such as the primary pressure and the secondary pressure. Such a valve device also produces substantially the same advantageous effects as those produced by the pressure reducing valve 1. Specifically, the leaf spring 12 is axially compressed and deformed by the casing 10. This means that it is possible to cause an initial load to axially act on the leaf spring 12 before the valve body 11 is actuated. Therefore, it is possible to reduce fluctuations in the load that acts on the leaf spring 12 during reciprocation of the valve body 11. In other words, the load amplitude on the leaf spring 12 can be reduced. As a result, the durability of the leaf spring 12 can be improved. Note that in the valve device, the one axial direction is not necessarily limited to the opening direction and may be the closing direction. In the pressure reducing valve 1, the leaf spring 12 is in abutment with the ceiling surface 14a, but the leaf spring 12 may be separate from the ceiling surface 14a as in a pressure reducing valve 1D illustrated in Fig. 9. Meanwhile, in the pressure reducing valve 1, the step 10c is formed on the casing 10 in order for the leaf spring 12 to be forcibly compressed and deformed, but the step 10c is not indispensable. In other words, it is sufficient that the leaf spring 12 be compressed and deformed by at least one of the ceiling surface 14a and the step 10c. Furthermore, a portion that presses the adjacent portion 12h of the leaf spring 12 is not necessarily limited to the step 10c and may be a protrusion. The step 10c may be a member separate from the cover part 10b. Such a step 10c, even when included in the cover part 10b, is included in the casing 10.

Furthermore, the leaf spring 12 does not necessarily need to be attached to the end surface of the valve body 11 and may be attached to a side surface of the valve body 11. Moreover, the shape of the leaf spring 12 is not limited to that described above; it is sufficient that the leaf spring 12 be in the shape of a plate extending radially outward from the valve body 11 (for example, rectangular). Furthermore, the leaf spring 12 does not even necessarily need to have the pressure receiving function or the sealing function, which may be achieved by the valve body 11 or another member. Specifically, a pressure receiving part may be formed on the valve body 11 or an O-ring or a diaphragm may be used to achieve sealing. In addition, the material of the valve body 11 is not necessarily limited to a synthetic resin and may be a metal.

Furthermore, the shape of the valve passage 13 is also not limited to the above-described shape described above. For example, the secondary passage 23 may be connected to the secondary chamber 26. Furthermore, the communication passage 11b such as that illustrated in Fig. 1 does not necessarily need to be formed in the valve body 11 in order to bring the secondary pressure to the secondary chamber 26. For example, a passage connecting the secondary passage 23 (or the annular passage 22a) and the secondary chamber 26 may be formed in the casing 10. In addition, the secondary passage 23 may be connected to the secondary chamber 26 via a passage and external piping.

In the pressure reducing valves 1B, 1C according to Embodiments 3, 4, the throttle members 11f, 11Cf are fitted and inserted in the respective passage parts 11Be, 11d to form the throttle 11g, but the throttle may be directly formed in each of the passage parts 11Be, 11d. Furthermore, the throttle 11g of the pressure reducing valve 1C according to Embodiment 4 may be formed having a tapered shape as in the pressure reducing valve 1A according to Embodiment 2.

### <Exemplary Embodiments>

A pressure reducing valve according to the first aspect includes: a casing in which a valve passage is formed; a valve body that is housed in the casing in an axially movable manner and adjusts an opening degree of the valve passage according to secondary pressure; and a biasing member that is housed in the casing and biases the valve body in one axial direction against the secondary pressure. The biasing member is a spring in the form of a plate extending radially outward from the valve body and is axially compressed and deformed at least when the secondary pressure is equal to atmospheric pressure.

According to this aspect, the biasing member is axially compressed and deformed. This means that it is possible to cause an initial load to axially act on the biasing member before the valve body is actuated. Therefore, it is possible to reduce fluctuations in the load that acts on the biasing member during reciprocation of the valve body. In other words, the load amplitude on the biasing member can be reduced. As a result, the durability of the biasing member can be improved.

A pressure reducing valve according to the second aspect is the pressure reducing valve according to the first aspect in which the biasing member is axially compressed and deformed by the casing.

According to this aspect, the biasing member is axially compressed and deformed by the casing. Therefore, the number of components is kept from increasing.

A pressure reducing valve according to the third aspect is the pressure reducing valve according to the second aspect in which the biasing member is axially compressed and deformed with an outer fixed portion fixed by the casing and an adjacent portion pressed by the casing, the outer fixed portion being located radially outward, the adjacent portion being located radially inward of the outer fixed portion.

According to this aspect, when the adjacent portion is pressed by the casing, the biasing member is axially compressed and deformed. Therefore, it is possible to cause a load to act on the adjacent portion in advance on which the load amplitude increases during actuation of the valve body. This makes it possible to reduce fluctuations in the load during reciprocation of the valve body. In other words, the load amplitude can be reduced.

A pressure reducing valve according to the fourth aspect is the pressure reducing valve according to the second or third aspect in which the biasing member includes a radial center portion formed in the shape of a protrusion projecting in the one axial direction and is axially compressed and deformed with the radial center portion pressed by the casing.

According to this aspect, when the radial center portion is pressed by the casing, the biasing member is axially compressed and deformed. Therefore, the load amplitude can be reduced during reciprocation of the valve body.

A pressure reducing valve according to the fifth aspect is the pressure reducing valve according to the fourth aspect in which the valve body is attached to the radial center portion of the biasing member.

According to this aspect, the valve body is attached to the radial center portion of the biasing member. Therefore, the direction in which the biasing member is pressed and the direction of movement of the valve body can be easily made coincident. This makes it possible to reduce the occurrence of partial contact or the like during reciprocation of the valve body, allowing the valve body to move smoothly.

A pressure reducing valve according to the sixth aspect is the pressure reducing valve according to any one of the first to fifth aspects in which the casing includes a valve seat part on which the valve body is seated, and the valve body includes, at one axial end portion, a gate residue generated during molding, and closes the valve passage by causing another axial end portion of the valve body to be seated on the valve seat part.

According to this aspect, when the adjacent portion is pressed by the casing, the biasing member is axially compressed and deformed. Therefore, it is possible to cause a load to act on the adjacent portion in advance on which the load amplitude increases during actuation of the valve body. This makes it possible to reduce fluctuations in the load during reciprocation of the valve body. In other words, the load amplitude can be reduced.

A pressure reducing valve according to the seventh aspect is the pressure reducing valve according to any one of the first to sixth aspects in which the casing includes a secondary chamber, the valve body includes a communication passage through which the secondary pressure is brought to the secondary chamber, the biasing member receives the secondary pressure brought to the secondary chamber and causes the valve body to move to a position corresponding to the secondary pressure received, and the communication passage includes a throttle.

According to this aspect, the communication passage through which the secondary pressure is brought to the secondary chamber includes a throttle. Therefore, it is possible to inhibit the transfer of secondary oscillation and a surge pressure in the secondary pressure to the secondary chamber. As a result, the biasing member and the valve body can be protected from the effects of the secondary oscillation and the surge pressure. Thus, the occurrence of chattering at the valve body is reduced.

A valve device according to the eighth aspect includes: a casing in which a valve passage is formed; a valve body that is housed in the casing in an axially movable manner and changes a position thereof according to a force acting thereon to change an opening degree of the valve passage; and a biasing member that is housed in the casing and biases, against a force acting thereon, the valve body in one axial direction in which the valve passage is opened. The biasing member is a spring in the form of a plate extending laterally from the valve body and is axially compressed and deformed by the casing.

According to this aspect, the biasing member is axially compressed and deformed by the casing. This means that it is possible to cause an initial load to axially act on the biasing member before the valve body is actuated. Therefore, it is possible to reduce fluctuations in the load that acts on the biasing member during reciprocation of the valve body. In other words, the load amplitude on the biasing member can be reduced. As a result, the durability of the biasing member can be improved.

A pressure reducing valve according to the ninth aspect is the pressure reducing valve according to the eighth aspect in which the casing includes a secondary chamber, the valve body includes a communication passage through which secondary pressure is brought to the secondary chamber, the biasing member receives the secondary pressure brought to the secondary chamber and causes the valve body to move to a position corresponding to the secondary pressure received, and the communication passage includes a throttle.

According to this aspect, the communication passage through which the secondary pressure is brought to the secondary chamber includes a throttle. Therefore, it is possible to inhibit the transfer of secondary oscillation and a surge pressure in the secondary pressure to the secondary chamber. As a result, the biasing member and the valve body can be protected from the effects of the secondary oscillation and the surge pressure. Thus, the occurrence of chattering at the valve body is reduced.

From the foregoing description, many modifications and other embodiments of the present invention would be obvious to a person having ordinary skill in the art. Therefore, the foregoing description should be interpreted only as an example and is provided for the purpose of teaching the best mode for carrying out the present invention to a person having ordinary skill in the art. Substantial changes in details of the structures and/or functions of the present invention are possible within the spirit of the present invention.

### Reference Signs List

1 pressure reducing valve
1A pressure reducing valve
10 casing
11 valve body
11c gate residue
12 leaf spring (biasing member)
12a center portion
12g outer fixed portion
12h adjacent portion
13 valve passage
24 valve seat part

## Claims

1. A pressure reducing valve comprising:
a casing in which a valve passage is formed;
a valve body that is housed in the casing in an axially movable manner and adjusts an opening degree of the valve passage according to secondary pressure; and
a biasing member that is housed in the casing and biases the valve body in one axial direction against the secondary pressure, wherein:
the biasing member is a spring in the form of a plate extending radially outward from the valve body and is axially compressed and deformed at least when the secondary pressure is equal to atmospheric pressure.

2. The pressure reducing valve according to claim 1, wherein:
the biasing member is axially compressed and deformed by the casing.

3. The pressure reducing valve according to claim 2, wherein:
the biasing member is axially compressed and deformed with an outer fixed portion fixed by the casing and an adjacent portion pressed by the casing, the outer fixed portion being located radially outward, the adjacent portion being located radially inward of the outer fixed portion.

4. The pressure reducing valve according to claim 2 or 3, wherein:
the biasing member includes a radial center portion formed in the shape of a protrusion projecting in the one axial direction and is axially compressed and deformed with the radial center portion pressed by the casing.

5. The pressure reducing valve according to claim 4, wherein:
the valve body is attached to the radial center portion of the biasing member.

6. The pressure reducing valve according to claim 1, wherein:
the casing includes a valve seat part on which the valve body is seated; and
the valve body includes, at one axial end portion, a gate residue generated during molding, and closes the valve passage by causing another axial end portion of the valve body to be seated on the valve seat part.

7. The pressure reducing valve according to claim 1, wherein:
the casing includes a secondary chamber;
the valve body includes a communication passage through which the secondary pressure is brought to the secondary chamber;
the biasing member receives the secondary pressure brought to the secondary chamber and causes the valve body to move to a position corresponding to the secondary pressure received; and
the communication passage includes a throttle.

8. A valve device comprising:
a casing in which a valve passage is formed;
a valve body that is housed in the casing in an axially movable manner and changes a position thereof according to a force acting thereon to change an opening degree of the valve passage; and
a biasing member that is housed in the casing and biases, against a force acting thereon, the valve body in one axial direction in which the valve passage is opened, wherein:
the biasing member is a spring in the form of a plate extending laterally from the valve body and is axially compressed and deformed by the casing.

9. The valve device according to claim 8, wherein:
the casing includes a secondary chamber;
the valve body includes a communication passage through which secondary pressure is brought to the secondary chamber;
the biasing member receives the secondary pressure brought to the secondary chamber and causes the valve body to move to a position corresponding to the secondary pressure received; and
the communication passage includes a throttle.
